# EUROPEAN PATENT APPLICATION

(11) **EP 1 675 073 A2**
(43) Date of publication of application: **28.06.2006**
(21) Application number: 05026596.6
(22) Date of filing: 06.12.2005
(51) Int. Cl.: G07F 7/08

(54) **Certification medium issue system and certification medium issue method**

(30) Priority: 21.12.2004 JP 2004369839
(71) Applicant: KABUSHIKI KAISHA TOSHIBA, Tokyo 105-8001 (JP)
(72) Inventor: Misumi, Yoshinori c/o Intell. Property Division, Minatu-ku, Tokyo 105-8001 (JP)
(74) Representative: Kramer - Barske - Schmidtchen

(57) **Abstract**

In a certification medium issue system, an issue process (S14) is executed to write each data in a storage unit (12) of an ID card (11) in a rewritable state. A confirmation process (S15) is executed to confirm the data written in the storage unit (12) of the ID card (11) subjected to the issue process (S14). A correction process (S17) is executed to correct the data written in the storage unit (12) of the ID card (11), in the case where an erroneous data is written in the storage unit (12) of the ID card (11) subjected to the issue process (S14). An issue completion process (S18) is executed to change the data written in the storage unit (12) of the ID card (11) to a state that cannot be rewritten, in the case where a correct data is written in the storage unit (12) of the ID card (11) subjected to the issue process (S14).

## Description

This invention relates to a certification medium issue system for issuing a certification medium such as an ID card and a method of issuing the certification medium.

In the prior art, the ID card as a certification medium is printed with personal information on the surface thereof. Further, in recent years, a storage medium having a storage unit such as an IC memory for storing data has been often used as an ID card. In the ID card having a storage unit such as an IC memory, the data such as the personal information are stored in the storage unit.

The ID card described above is issued by an issue system operated by the issuer in accordance with an application from an applicant. In the system for issuing the ID card having the storage unit described above, the personal information is printed on the printing surface of the storage medium used as a certification medium, and the data such as the personal information is written in the storage unit of the storage medium. Also, in the issue system described above, the data is written in a state that cannot be rewritten, in the storage unit of the storage medium constituting the certification medium to prevent the alteration by rewriting of the data.

In the conventional ID card issue system, therefore, if an erroneous data is written in the storage unit of the storage medium during the issue process, the data cannot be rewritten. Specifically, in the case where an erroneous data is written in the storage unit of the storage medium used as an ID card in the issue process in the conventional issue system, the particular storage medium is required to be disposed of and the issue process is required to be executed again using a new storage medium.

Accordingly, it is an object of the present invention to provide a certification medium issue system and a certification medium issue method in which the access to the data written in the storage unit of the storage medium used as a certification medium can be efficiently controlled.

A certification medium issue system according to one embodiment of the present invention has: an information acquisition unit which acquires issue data required to issue a certification medium; an issue process execution unit which writes the various data based on the issue data acquired by the information acquisition unit in a storage unit of a storage medium used as a certification medium in a rewritable state; a correction process execution unit which corrects the data written in the storage unit of the storage medium upon confirmation that the data written in the storage unit of the storage medium subjected to the issue process by the issue process execution unit is erroneous; and an issue completion process execution unit which prohibits the data written in the storage unit of the storage medium from being rewritten upon confirmation that the data written in the storage unit of the storage medium subjected to the issue process by the issue process execution unit is correct.

A certification medium issue method according to one embodiment of the present invention comprises the steps of: acquiring issue data required to issue a certification medium; executing an issue process for writing various data based on the acquired issue data in a storage unit of a storage medium used as a certification medium in a rewritable state; executing a correction process for correcting the data written in the storage unit of the storage medium upon confirmation that the data written in the storage unit of the storage medium subjected to the issue process is erroneous; and executing an issue completion process for prohibiting the data written in the storage unit of the storage medium from being rewritten upon confirmation that the data written in the storage unit of the storage medium subjected to the issue process is correct.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram schematically showing a configuration of a certification medium issue system according to an embodiment of the invention;
FIG. 2 is a schematic diagram showing an example of a configuration of a printer;
FIG. 3 is a schematic diagram showing an example of a configuration of a confirmation terminal unit;
FIG. 4 is a diagram for explaining an example of the structure of the data stored in the storage unit of an ID card;
FIG. 5 is a diagram for explaining an example of the structure of the data stored in the storage unit of an ID card;
FIG. 6 is a flowchart for explaining the outline of the whole procedure for issuing an ID card in a certification medium issue system;
FIG. 7 is a flowchart for explaining the process in an image pickup unit;
FIG. 8 is a flowchart for explaining the outline of the process in a printer;
FIG. 9 is a flowchart for explaining the issue process and the correction process in the printer in detail;
Fig 10 is a flowchart for explaining the data write process and the data rewrite process in detail;
FIG. 11 is a flowchart for explaining the process executed in the confirmation terminal unit;
FIG. 12 is a flowchart for explaining a first example of the correction process; and
FIG. 13 is a flowchart for explaining a second example of the correction process.

Embodiments of the present invention will be explained below with reference to the drawings.

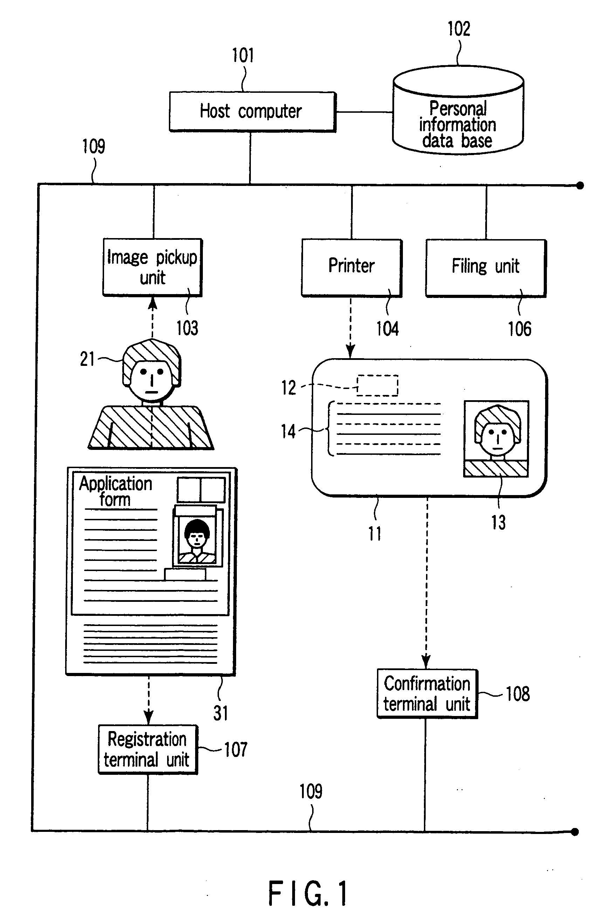

FIG. 1 schematically shows an example of a configuration of a certification medium issue system according to an embodiment of the invention.

First, the certification medium issued by the certification medium issue system shown in FIG. 1 is explained.

The certification medium issue system shown in FIG. 1 issues a certification medium such as an ID card to certify an individual person. The certification medium issued by the certification medium issue system is, for example, a car driving license or any of various other certificates. The certification medium constitutes a storage medium having a storage unit such as an IC memory for storing digital information. The storage medium used for the certification medium has a printing surface on which an image or characters can be printed. Further, the storage medium used as the certification medium may be in the form of card or booklet.

This embodiment is explained mainly on the assumption that the storage medium used as a certification medium (ID card) is an IC card.

The IC card used as an ID card 11 has a card-like housing with an IC chip 12 built therein as shown in FIG. 1. The printing surface (obverse surface) of the IC card used as the ID card 11 is adapted to be printed with information used by a third party to confirm an individual person (the holder of the particular ID card). The printing surface (obverse surface) of the IC card forming the ID card 11, as shown in FIG. 1, is printed with, for example, a face image (an image including at least the face) 13 of the ID card holder and the character information 14 such as the personal information on the ID card holder. The character information 14 printed on the printing surface (obverse surface) of the IC card constituting the ID card 11 includes the personal number (ID number), name, age and address of the ID card holder.

The IC chip 12 built in the IC card used as the ID card 11 is configured of, for example, a control element (not shown), various memories (not shown) and a communication interface (not shown). The IC chip 12 functions at least as a storage unit to store data. The IC chip 12, for example, reads the data from the memory or writes the data into the memory based on the data communication with a host system (card reader-writer) through the communication interface.

The IC card used as the ID card 11 may be of either contact type or no-contact type. The communication interface of the IC card of contact type is configured of a contactor and a communication controller. The IC card of contact type having such a communication interface carries out data communication with the card reader-writer as a host system in physical contact therewith. The communication interface in the IC chip of the IC card of no-contact type is configured of an antenna and a radio communication controller. The IC card of no-contact type having such a communication interface conducts the data communication by radio with the card reader-writer making up a host system.

Next, the procedure for issuing the certification medium in the certification medium issue system is briefly explained.

First, an applicant 21 for the issue of an ID card (hereinafter simply referred to as the applicant 21) submits to the prospective issuer an ID card issue application form (hereinafter simply referred to as the application form) 31 filled with the personal information including the request to issue the ID card. The issuer who has received the application form 31 executes the process of issuing the ID card 11 for the applicant 21 based on the information such as the personal information of the applicant 21 derived from the contents described in the application form 31 and the biological information such as the face image of the applicant acquired by an image pickup unit or the like. In the issue process, the IC card making up the ID card in initial state is printed with the personal information in the form of an image and characters printed on the printing surface (obverse surface), and the data are stored in the IC chip 12 making up the storage unit. In this issue process, the information stored in the storage unit 12 is rewritable.

Upon execution of the process of issuing the ID card 11 for the applicant 21, the issuer causes the applicant 21 to confirm the data stored in the storage unit 12 of the ID card 11 subjected to the issue process. In the case where the confirmation shows an error in the data stored in the storage unit 12 of the ID card 11, the applicant 21 requests the data to be corrected. Upon receipt of the request from the applicant 21 to correct the data, the issuer rewrites the information stored in the storage unit 12 of the ID card 11 in accordance with the correction request from the applicant 21.

Once the applicant 21 has confirmed that the information stored in the storage unit 12 of the ID card 11 is correct, the issuer sets the information stored in the storage unit (IC chip) 12 of the ID card 11 in a state incapable of being rewritten. The ID card 11 of which the data stored in the storage unit (IC chip) 12 is set in a state incapable of being rewritten in this way is delivered to the applicant 21.

Next, an example of a configuration of the certification medium issue system described above is explained.

The certification medium issue system, as shown in FIG. 1, is configured of a host computer 101, a data base 102, an image pickup unit 103, a printer 104, a filing unit 106, a registration terminal unit 107, a confirmation terminal unit 108 and a network 109.

Nevertheless, the certification medium issue system is not limited to the system configuration shown in FIG. 1. In the certification medium issue system, the units capable of executing the various processes described later are required to be connected in a communicable way through the network 109 and the like. For example, the host computer 101 can be integrated with the data base 102, the image pickup unit 103 with the printer 104, the printer 104 with the confirmation terminal unit 108 or the registration terminal unit 107 with the confirmation terminal unit 108.

The host computer 101 is configured of, for example, a multi-purpose computer. The host computer 101 is a device in charge of the overall control of the certification medium issue system.

The data base 102 is connected to the host computer 101. The information on each ID card 11 including the personal information of the applicant 21 is registered in the data base 102. Specifically, the information to be printed on the printing surface of the ID card 11 and the data to be written in the storage unit 12 of the ID card 11 are stored in the data base 102. Also, the information on each ID card 11 is registered with a corresponding personal number (ID number) of each applicant (each ID card holder) 21 in the data base 102.

The image pickup unit 103 is a device for picking up a face image (an image including at least the face) of the applicant 21. The image pickup unit 103 has a controller (not shown), an operating unit (not shown) and a camera (not shown). The controller of the image pickup unit 103 processes the data and executes the data communication process as well as the process of controlling each part. Through the operating unit of the image pickup unit 103, the personal information (ID number) of the person to be imaged or an operating instruction including an instruction to start to pick up the image is input. The camera of the image pickup unit 103 picks up the face image of the particular person based on the control operation of the controller.

The image pickup unit 103 also functions as a biological information acquisition unit for acquiring the face image as biological information of the applicant 21. The face image constituting the biological information of the applicant 21 is used, for example, as an authentication data to identify the applicant 21. The biological information on the person used as the authentication data stored in the ID card 11 may include the fingerprint image, the iris image, the palm image, the finger image or the vein image other than the face image. In the case where the biological information other than the face image is used as the authentication data, the certification medium issue system further includes a biological information acquisition unit corresponding to the particular biological information.

The printer (issue unit) 104 executes the process of issuing or correcting the ID card (certification medium) 11. The printer 104 has the printing function and the data write function. The printing function of the printer 104 is to print the printing surface (obverse surface) of the IC card (storage medium) issued initially as the ID card 11. The data write function of the printer 104, on the other hand, is to write the data in the IC chip (storage unit) 12 of the IC card (storage medium) initially issued as the ID card 11.

The printer 104 executes the process to issue the ID card (certification medium) 11 based on the information stored in the data base 102 and the face image picked up by the information pickup unit 103. In the process to issue the ID card 11, the printer 104 prints the face image 13 and the character information (ID number, name, age and address) 14 of the applicant 21 on the surface of the ID card 11 not yet issued, while at the same time writing the data including the personal information in the IC chip 12 of the same ID card 11.

The filing unit 106 is to file the personal information, etc. of the applicant 21. The filing unit 106 files the information including the face image, personal number, name, age and address as the personal information of the applicant 21. The filing unit 106 files the information such as the personal information of the applicant 21 required to issue the ID card from the printer 104.

The registration terminal unit 107 is to register the information in the data base 102. The registration terminal unit 107 is configured of a multi-purpose computer or the like. In the registration terminal unit 107, the information, for example, including the personal information described in the application form 31 submitted by the applicant 21 is input by the issuer. In the registration terminal unit 107, the information of the applicant 21 input by the issuer based on the contents described in the application form 31 is registered in the data base 102.

The confirmation terminal unit 108 is to confirm the ID card 11 subjected to the issue process by the printer 104. The confirmation terminal unit 108 is configured of a multi-purpose computer or the like. In the confirmation terminal unit 108, the data stored in the storage unit 12 of the ID card 11 subjected to the issue process by the printer 104 is confirmed by the applicant 21. In the case where the data stored in the storage unit 12 of the ID card 11 is erroneous, the confirmation terminal unit 108 executes the process to correct the particular data.

The network 109 interconnects the host computer 101, the image pickup unit 103, the printer 104, the filing unit 106, the registration terminal unit 107 and the confirmation terminal unit 108.

Next, the configuration of the printer 104 is explained.

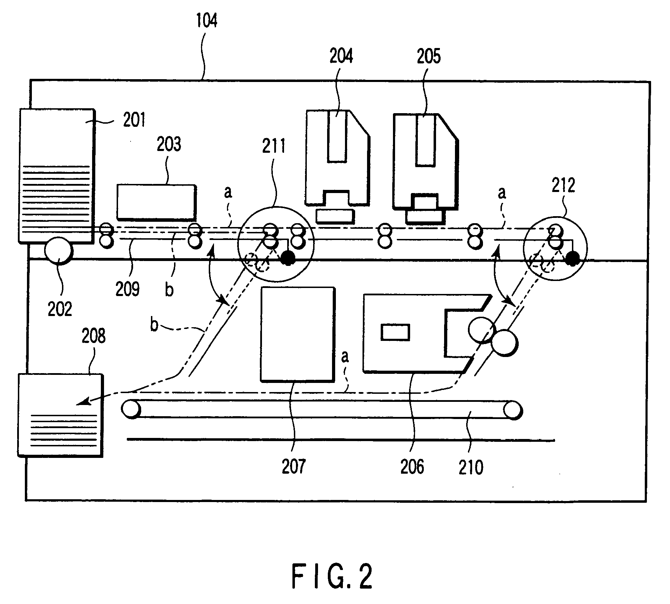

FIG. 2 is a schematic diagram showing an example of a configuration of the printer 104.

The printer 104, as shown in FIG. 2, is configured of a hopper 201, a recovery unit 202, a card reader-writer 203, an image printing unit 204, a character printing unit 205, a protective material coating unit 206, a hardening unit 207, a delivery unit 208, a transportation path 209, a transportation path 210, a transport switching unit 211 and a transport direction switching unit 212.

The printer 104 also has a controller not shown. The controller of the printer 104 processes the data and executes the data communication process in addition to the control operation for various parts. Also, the printer 104 has an operating unit not shown. An operating instruction of the operator is input through the operating unit of the printer 104.

The hopper 201 is loaded with an ID card 11 not yet issued (the IC card in initial state) or an ID card 11 of which the information stored in the storage unit 12 is to be corrected. The recovery unit 202 is to recover the ID cards 11, one by one, loaded in the hopper 201.

The card reader-writer 203 is to execute the process of writing or reading the data into or from the storage unit (IC chip) 12 built in the ID card (IC card) 11. In the case where the ID card 11 is configured of an IC card, the card reader-writer 203 supplies a command to the IC card constituting the ID card 11 and receives the result of processing the command as a response.

In the case where the data are written in the IC chip 12 of the IC card constituting the ID card 11, for example, the card reader-writer 203 transmits a command requesting to write the data to the IC card. The IC card that has received the data write request writes the data in the memory in the IC chip 12 in accordance with the security attribute information described later. Also, the IC card transmits the result of executing the write process to the card reader-writer 203 as a response to the command.

In the case where the data stored in the IC chip 12 of the IC card constituting the ID card 11 is read, the card reader-writer 203 transmits a command requesting to read the data to the IC card. The IC card that has received the data read request reads the data from the memory in the IC chip 12 in accordance with the security attribute information described later. Also, the IC card transmits the result of executing the read process to the card reader-writer 203 as a response to the command.

In the case where the data stored in the IC chip 12 of the IC card making up the ID card 11 is rewritten, the card reader-writer 203 transmits a command requesting to rewrite the data to the IC card. The IC card that has received the data rewrite request rewrites the data stored in the memory in the IC chip 12 in accordance with the security attribute information described later. Also, the IC card transmits the result of executing the rewrite process to the card reader-writer 203 as a response to the command.

The image printing unit 204 is to print the face image 13 on the printing surface (obverse surface) of the ID card 11. The character printing unit 205, on the other hand, is to print the character information (personal information) 14 on the printing surface (obverse surface) of the ID card 11. The protective material coating unit 206 is to coat a protective material on the printing surface (obverse surface) of the ID card 11. The hardening unit 207 is to harden the protective material coated by the protective material coating unit 206.

The delivery unit 208 is to stack the ID cards 11 that have been issued or corrected. The transportation paths 209, 210 are to transport the ID card 11 recovered by the recovery unit 202 to each part. The transport switching unit 211 is to switch the transportation path of the ID card 11 recovered by the recovery unit 202. In the transport switching unit 211, the transportation path of the ID card 11 recovered by the recovery unit 202 is switched to either a transportation path a indicated by one-dot chain or a transportation path b indicated by two-dot chain. The transportation path a indicated by one-dot chain is to transport the ID card 11 in the issue process. The transportation path b indicated by two-dot chain, on the other hand, is to transport the ID card 11 in the correction process. The transport direction switching unit 212 is to send the ID card 11 in transit on the transportation path 209 to the transportation path 210.

In the printer 104 configured as described above, the process of issuing the ID card 11 is executed by the transport switching unit 211 switching the transportation path of the ID card 11 to be processed to the transportation path a indicated by one-dot chain in FIG. 2. Specifically, the issue process is executed while transporting the ID card 11 through the hopper 201, the recovery unit 202, the card reader-writer 203, the transport switching unit 211, the face image printing unit 204, the character printing unit 205, the transport direction switching unit 212, the protective material coating unit 206, the hardening unit 207 and the delivery unit 208 in that order.

In the case where the ID card 11 is corrected in the printer 104, on the other hand, the transportation path of the ID card 11 involved is switched to the transportation path b indicated by two-dot chain in FIG. 2 by the transport switching unit 211. Specifically, in the correction process, the ID card 11 is transported through the hopper 201, the recovery unit 202, the card reader-writer 203, the transport switching unit 211 and the delivery unit 208 in that order.

In the printer 104 configured as described above, the transportation path of the ID card 11 can be switched by the transport switching unit 211. As a result, the printer 104 is capable of selectively and efficiently executing a first process required to print the printing surface of the ID card and to write the data in the storage unit, and a second process required only to write the data in the storage unit of the ID card.

Next, the configuration of the confirmation terminal unit 108 is explained.

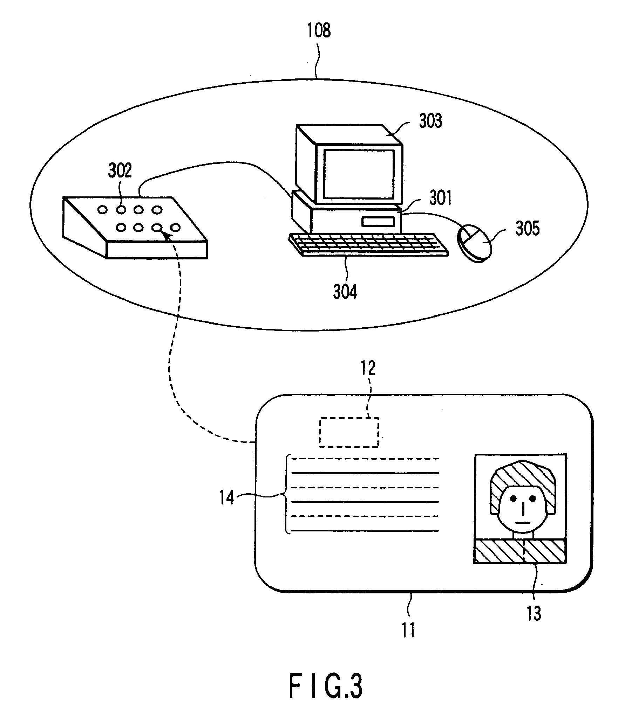

FIG. 3 is a diagram showing an example of a configuration of the confirmation terminal unit 108.

The confirmation terminal unit 108 is to confirm the information stored in the storage unit (IC chip) 12 of the ID card 11 subjected to the issue process by the printer 104.

The confirmation terminal unit 108, as shown in FIG. 3, includes a processing unit 301, a card reader-writer 302, a display unit 303, a keyboard 304 and a mouse 305.

The processing unit 301 has a controller (not shown), a memory (not shown), a storage unit (not shown), various interfaces (not shown) and a network interface (not shown). In the processing unit 301, the control program stored in the memory is executed by the controller thereby to execute various data processing. Also, the processing unit 301 is connected to the card reader-writer 302, the display unit 303, the keyboard 304 and the mouse 305 through various interfaces.

The card reader-writer 302 is to execute the process of writing or reading the data into or from the storage unit (IC chip) 12 of the ID card (IC card) 11. The card reader-writer 302 has· a similar function to that of the card reader-writer 203 of the printer 104. The card reader-writer 302 of the confirmation terminal unit 108 may have only the function of reading the data from the storage unit 12 of the ID card 11.

The card reader-writer 302 operates based on the control operation of the processing unit 301. In the data read process, for example, the card reader-writer 302 supplies the processing unit 301 with the data read from the storage unit 12 of the ID card 11. In the data write process, on the other hand, the card reader-writer 302 writes the write data designated by the processing unit 301 in the storage unit 12 of the ID card 11.

The display unit 303 is configured of a display. The display unit 303 displays the data under the control of the processing unit 301. The display unit 303 displays, for example, the information read from the ID card 11 by the card reader-writer 302 or the operation guidance.

The keyboard 304 and the mouse 305 make up an operating unit operated by the operator. The information input to the keyboard 304 or the mouse 305 is supplied to the processing unit 301.

As described above, the printing surface (obverse surface) of the ID card 11 is printed with the face image 13 of the ID card holder, and the personal information 14 such as the name, address and personal number of the holder of the ID card 11. Also, the data including the personal information of the holder of the ID card 11 is written in the storage unit 12 of the ID card 11. The data similar to the information printed on the printing surface are written in the storage unit 12 of the ID card 11.

The confirmation terminal unit 108 configured as described above executes the confirmation process for confirming the data written in the storage unit 12 of the ID card 11 and the correction process for correcting the data written in the storage unit 12 of the ID card 11. In the confirmation process, the confirmation terminal unit 108 reads the data written in the storage unit 12 of the ID card 11 by the card reader-writer 302, and displays the data read from the storage unit 12 on the display unit 303. As a result, the confirmation terminal unit 108 can confirm the data written in the storage unit 12 of the ID card 11 based on the information displayed on the display unit 303.

Next, the data written in the storage unit 12 of the ID card 11 is explained.

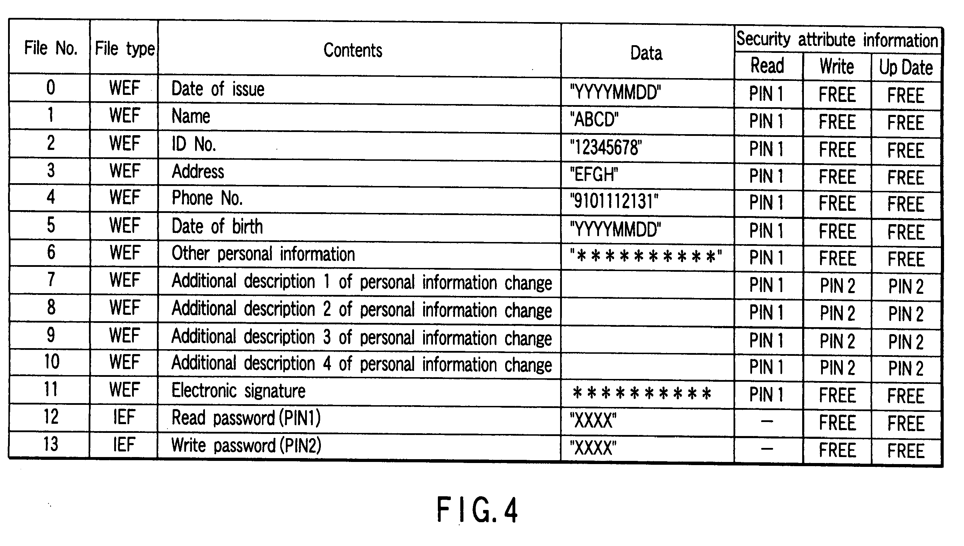

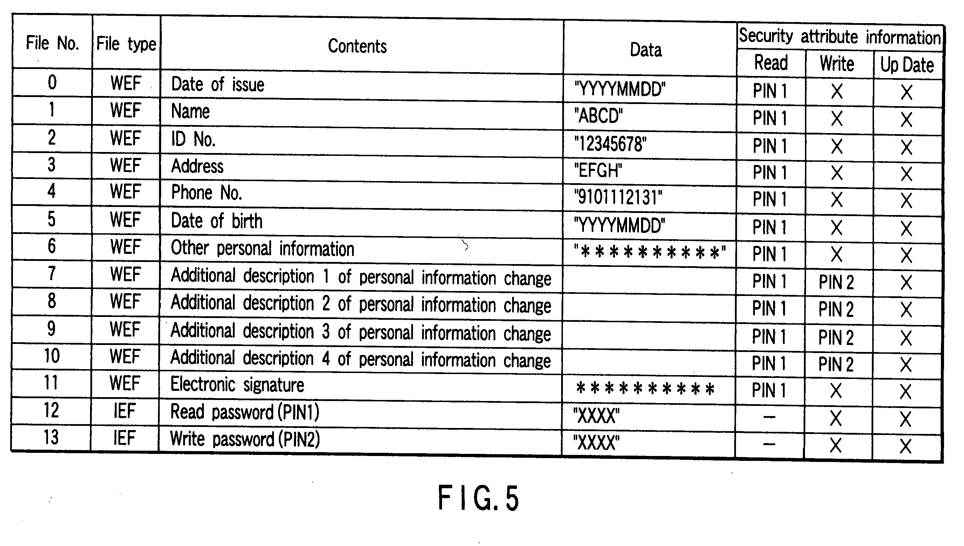

FIGS. 4 and 5 are diagrams showing an example of the structure of the data written in the storage unit 12 of the ID card 11.

The example shown in FIGS. 4 and 5 illustrates the security attribute information for each data as well as the structure of the data written in the storage unit 12 of the ID card 11.

In the example shown in FIGS. 4 and 5, various data are stored as files. In this example, the file number, file type, contents, data and security attribute information are stored for each data stored in each file. The file number is an ID number for identifying the file. The file type is the information indicating the data format of the file. The contents are the information indicating the contents of the data in the file. The data is the data proper of the file.

The security attribute information indicates the conditions for accessing the data in the file. In the example shown in FIGS. 4 and 5, the access conditions for reading, writing and rewriting the data in the file are stored as the security attribute information.

The access condition [Read] for reading the data, for example, is the information indicating the condition for reading the data of the file. As the condition [Read] for reading the data, for example, "PIN1" is set in the file from which the reading of the data is permitted based on the successful collation using the read password (PIN1) described later. In the file from which the reading of the data is permitted, on the other hand, "FREE" is set as the condition [Read] for reading the data. With regard to the file from which the reading of the data is prohibited, "×" is set as the condition [Read] for reading the data.

The access condition [Write] for writing the data, by contrast, is the information indicating the condition for permitting the operation of writing the data into the file (the condition for the initial data write operation). As an example, "PIN2" is set as the condition [Write] for writing the data, in the file into which the writing of the data is permitted based on the successful collation using the write password (PIN2) described later. In the file into which the writing of the data is permitted unconditionally, on the other hand, "FREE" is set as the condition [Write] to write the data. With regard to the file into which the writing of the data is prohibited, "x" is set as the condition [Write] for the data write operation.

The access condition [UpDate] for the data rewrite operation, by contrast, is the information indicating the condition for permitting the operation of rewriting the data in the file. In the file into which the rewriting of the data is permitted based on the successful collation using the rewrite password (PIN2) described later, for example, "PIN2" is set as the condition [UpDate] for rewriting the data. In the file in which the rewriting of the data is permitted unconditionally, on the other hand, "FREE" is set as the condition [UpDate] for rewriting the data. With regard to the file in which the rewriting of the data is prohibited, "x" is set as the condition [UpDate] for the data rewrite operation.

In the example shown in FIGS. 4 and 5, the file of file number "0" has stored therein the data "YYYYMMDD" indicating the date of issue of the ID card 11. The file of file number "1", on the other hand, has stored therein the data "ABCD" indicating the name of the applicant 21 as a holder of the particular ID card 11. The file of file number 2 has stored therein the data "12345678" indicating the personal number (ID number) of the applicant 21. The file of file number 3 has stored therein the data "EFGH" indicating the address of the applicant 21. The file of file number 4 has stored therein the data "9101085131" indicating the telephone number of the applicant 21. The file of file number 5 has stored therein the data "YYYYMMDD" indicating the date of birth of the applicant 21. The file of file number 6 has stored therein the data indicating the other personal information. The files of file numbers 7 to 10 have stored therein the data indicating the personal information (additional information) changed after issue of the particular ID card 11.

The file of file number 11 has stored therein the electronic signature data for substantiating the legitimacy of the data written in the storage unit 12 of the ID card 11 or the identity of the issuer of the ID card 11. For example, the electronic signature data is generated by encrypting the data generated by the hash function based on the data in a part or the whole of the files using a public key.

The file of file number 12 has stored therein the data indicating the password (PIN1) for reading each file. An example of the read password is the data submitted by the applicant 21. The read password is used as the authentication data for the read operation required to read the data of each file. In the case where the applicant 21 uses the biological information as the authentication data for the read operation, therefore, the biological information of the applicant 21 may be stored in the file of file number 12 as the authentication data for the read operation.

The file of file number 13 has stored therein the write password (PIN2) for each file. An example of the write password is the data submitted by the applicant 21. The write password is the authentication data for the write operation required to write or rewrite the data in each file. In the case where the biological information of the applicant 21 is used as the authentication data for the write operation, therefore, the biological information of the applicant 21 can be stored in the file of file number 13 as the authentication data for the write operation.

The files described above are available in various types. The example shown in FIGS. 4 and 5 represents two file types. The file type of the files of file numbers 0 to 11 shown in FIGS. 4 and 5 is "WEF". The files of type "WEF" have stored therein the data directly accessible from the normal application.

The file type of the files of file numbers 12 and 13 shown in FIGS. 4 and 5, on the other hand, is "IEF". The files of type "IEF" have stored therein the authentication data for the password collation or the other various authentication processes. The files of type "IEF", therefore, cannot be directly accessed from the normal application.

For the IC card constituting the ID card 11, for example, the authentication data are collated (the collation of the password, for example) based on the authentication data of the file "IEF". Once this collation of the authentication data is successful, the access to each file of "WEF" in the IC card constituting the ID card 11 becomes possible in accordance with the security attribute information.

In the example shown in FIGS. 4 and 5, for example, assume that the data (name) stored in the file of file number 1 is read. First, as for the IC card making up the ID card 11, the password is collated based on the read password file of file number 12. Once this collation by the read password file ends in success, the data from the file of file number 1 can be read for the IC card constituting the ID card 11.

In the case where the collation by the read password or the write password fails a predetermined number of times in a row, the file (file type "IEF") of the particular read password or write password can be closed. In this case, all the files "WEF" related to the file "IEF" become inaccessible.

Next, an example of change in the security attribute information of each file is explained.

FIG. 4 is a diagram showing an example of the information stored in the storage unit 12 of the ID card 11 before the issue completion process described later. FIG. 5 is a diagram showing an example of the information stored in the storage unit 12 of the ID card 11 after the issue completion process described later. Specifically, FIG. 4 shows the state of each file of the ID card 11 for which only the issue process is completed (i.e. the ID card for which the issue completion process described later has not been executed), and FIG. 5 shows the state of each file of the ID card for which all the issue procedures are completed (i.e. the ID card for which the issue completion process described later is executed).

In FIGS. 4 and 5, the security attribute information is varied from one file to another.

As described above, the printer 104 executes the process of issuing the ID card 11. In this issue process, the data other than the electronic signature data is stored in each file. Also, in the issue process, the data can be written or rewritten (updated) as shown in FIG. 4 for the security attribute information of each file.

This indicates that the data of each file can be rewritten for the ID card 11 immediately after the issue process. Specifically, even in the case where the applicant 21 fills in the application form 31 erroneously or the issuer erroneously registers the information, the data of each file of the ID card 11 for which the issue process has been executed by the printer 104 can be corrected before changing the security attribute information.

The confirmation terminal unit 108 executes the process of confirming the ID card 11. This confirmation process confirms whether the data of each file is correct or not. In the case where the confirmation shows that correction is required, the data of each file of the ID card 11 is corrected by the correction process described later. In the case where the confirmation process shows that the data in each file is correct, on the other hand, the security attribute information of each file of the ID card 11 is set in a state (prohibited state) in which the data is incapable of being written or rewritten (updated).

This indicates that the ID card 11 of which the legitimacy of the data is confirmed by the confirmation process is prohibited from writing and rewriting the data of each file by the issue completion process described later. Specifically, with regard to the ID card 11 of which the data legitimacy is confirmed by the confirmation process of the confirmation terminal unit 108, the security attribute information of each file is changed by the issue completion process to prohibit the data write and rewrite operation. Therefore, the data of each file of the ID card 11 for which the issue completion process is executed cannot be corrected. As a result, the data alteration or the like illegal access is impossible for the ID card 11 with the security attribute information set in the state shown in FIG. 5 (i.e. the ID card for which the issue completion process has been executed), thereby providing a high security.

As shown in FIG. 4, the electronic signature data is not written in the storage unit 12 of the ID card 11 for which the issue completion process is not executed. As shown in FIG. 5, on the other hand, the electronic signature data is written in the storage unit 12 of the ID card 11 for which the issue completion process has been executed. In other words, the electronic signature data is not written in the issue process but written in the storage unit 12 of the ID card 11 by the issue completion process after the confirmation process.

Next, the flow of each process for the whole procedures to issue the ID card 11 in the certification medium issue system is briefly explained.

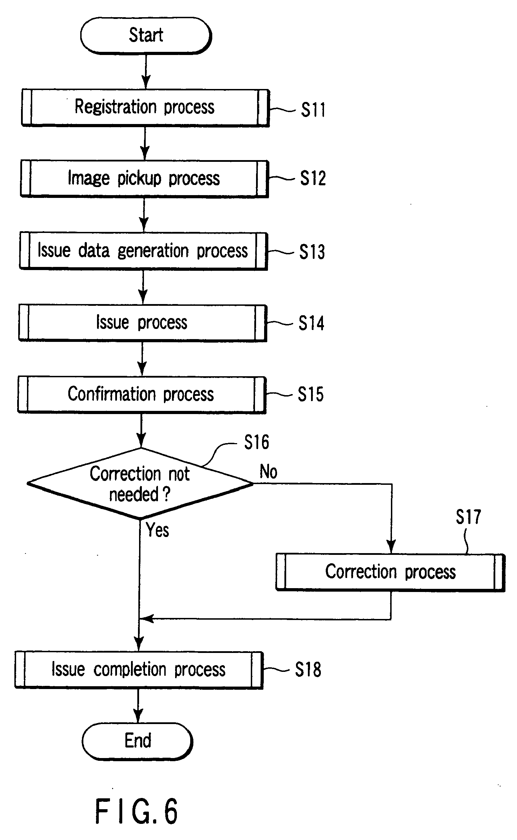

FIG. 6 is a flowchart for briefly explaining the process flow in each device of this certification medium issue system.

First, the applicant 21 submits the application form 31 requesting the issue of the ID card 11 to the prospective issuer. This application form contains the description of the personal information required to issue the ID card 11. The issuer who has received the application form 31 goes through the procedure for issuing the ID card 11 of the applicant 21 based on the application form 31.

As the first step of the procedure for issuing the ID card 11, the registration terminal unit 107 executes the process of registering the information required to issue the ID card 11 (step S11). In this registration process, the information including the personal information of the applicant 21 described in the application form 31 is registered in the data base 102 as the information corresponding to the personal number (ID number). Specifically, in the registration terminal unit 107, the information including the personal information of the applicant 21 described in the application form 31 is input by the operation of the issuer. Once the information including the personal information of the applicant 21 described in the application form 31 is input, the registration terminal unit 107 registers the input information in the data base 102 through the network 109.

Upon completion of the process of registering the information including the personal information of the applicant in the data base 102, the image pickup unit 103 executes the process of picking up a face image of the applicant 21 (step S12). In this image pickup process, the face image of the applicant 21 identified by the personal number input by an operating unit not shown is picked up. The face image picked up by this image pickup process is set in correspondence with the personal number (ID number) of the applicant input by the operating unit not shown.

Once the face image of the applicant 21 is picked up, the image pickup unit 103 executes the process of generating the issue data to issue the ID card 11 of the applicant 21 (step S13). In this issue data generation process, the issue data for issuing the ID card 11 is generated based on the face image of the applicant 21 picked up by the image pickup unit 103 and the information of the applicant 21 registered in the data base 102.

Upon generation of the issue data by the issue data generation process described above, the printer 104 executes the process of issuing the ID card 11 based on the issue data generated by the issue data generation process (step S14). In this issue process, the process of printing the printing surface of the storage medium (such as the IC card) used as the ID card and the process of writing the data into the storage unit (such as the IC chip) 12 of the storage medium are executed.

Upon completion of the process of issuing the ID card 11 by the printer 104, the confirmation terminal unit 108 executes the confirmation process for causing the applicant 21 to confirm the information written in the storage unit 12 of the ID card 11 issued by the printer 104 (step S15). In this confirmation process, the applicant is caused to confirm, in the presence of the issuer, the data written in the storage unit 12 of the ID card 11 for which the issue process has been executed.

In the case where the confirmation process confirms that the data written in the storage unit 12 of the ID card 11 is erroneous, i.e. upon confirmation that the data written in the storage unit of the ID card 11 is required to be corrected (NO at step S16), the correction process is executed by the confirmation terminal unit 108 to correct the data written in the storage unit 12 of the ID card 11 (step S17). The correction process may be executed by either the confirmation terminal unit 108 or the printer 104. Further, with regard to the ID card 11 after the correction process, the confirmation process can be executed again or the issue completion process can be executed after the correction process.

In the case where the confirmation process confirms that the data written in the storage unit 12 of the ID card 11 is correct, i.e. upon confirmation that the data written in the storage unit of the ID card 11 is not required to be corrected (YES at step S16), on the other hand, the confirmation terminal unit 108 executes the issue completion process with the completion of the procedure for issuing the ID card 11 (step S18).

This issue completion process includes the process to write the electronic signature data and the process to change the security attribute information. In the process for writing the electronic signature data in the issue completion process, the electronic signature data to substantiate the legitimacy of the data written in the storage unit of the ID card 11 is written in the storage unit of the ID card 11. In the security attribute information change process in the issue completion process, the security attribute information of each file (the file of the data incapable of being rewritten after issue) for storing the personal information of the holder is set in a state prohibiting the write and rewrite operation.

The ID card 11 for which the issue completion process has been executed as described above is delivered to the applicant from the issuer as a usable ID card.

Next, the process executed in the image pickup unit 103 is explained.

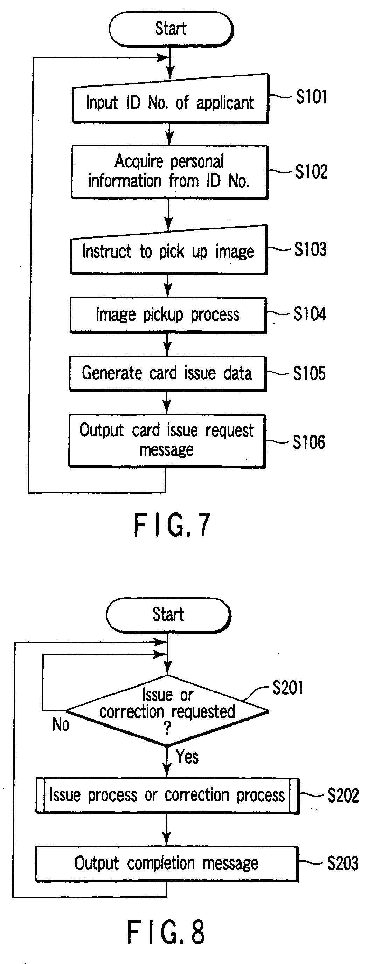

FIG. 7 is a flowchart for explaining an example of the process executed in the image pickup unit 103. FIG. 7 shows an example of the procedure for the image pickup process and the issue data generation process executed by the image pickup unit 103.

First, the operator of the image pickup unit 103 inputs the ID number of the applicant 21 as a person to be imaged by the operating unit not shown (step S101). Once the ID number of the person to be imaged is input, the image pickup unit 103 acquires the personal information of the applicant 21 corresponding to the ID number input from the data base 102 through the host computer 101 on the network 109 (step S102).

The operator who has input the ID number of the person to be imaged further guides the person to be imaged to the image pickup position and inputs an image pickup instruction by way of the operating unit not shown (step S103). Once the image pickup instruction is input, the image pickup unit 103 picks up the face image of the applicant 21 by a camera not shown (step S104).

Once the face image of the applicant 21 is picked up, the image pickup unit 103 generates the issue data to issue the ID card 11 for the applicant 21 based on the face image of the applicant 21 picked up and the personal information of the applicant 21 acquired from the data base 102 (step S105). The issue data generated by the issue data generation process is configured of the printing data to be printed on the printing surface of the ID card 11 and the write data to be written in the storage unit 12 of the ID card 11.

Upon generation of the issue data to issue the ID card 11 for the applicant 21, the image pickup unit 103 transmits an issue request message with the generated issue data to the printer 104 (step S106).

The issue data generation process can be executed by either the host computer 101 or the filing unit 106. In this case, in the host computer 101 or the filing unit 106, as the case may be, the issue data is generated from the information of the ID card based on the face image acquired from the image pickup unit 103 and the personal information of the applicant 21 acquired from the data base 102, and the issue request message with the generated issue data attached thereto is transmitted to the printer 104.

Next, the operation of the printer 104 is explained.

FIG. 8 is a flowchart for briefly explaining the operation of the printer 104.

Specifically, the printer 104, upon receipt of the issue request message from the image pickup unit 103 (step S201), executes the process of issuing the ID card 11 based on the issue data attached to the issue request message (step S202). Upon completion of the process of issuing the ID card 11, the printer 104 transmits the message indicating the completion of the process of issuing the ID card 11, to the image pickup unit 103 or the host computer 101 (step S203). As described above, the printer 104 executes the process of issuing the ID card 11 in response to the issue request message.

In the certification medium issue system, assume that the correction process described later is executed by the printer 104. The printer 104 executes the correction process according to the procedure shown in FIG. 8. Specifically, the printer 104, upon receipt of a correction request message from the confirmation terminal unit 108 (step S201), executes the process of correcting the ID card 11 based on the correction data attached to the correction request message (step S202). Upon completion of the correction process, the printer 104 transmits a message indicating the completion of the correction process to the confirmation terminal unit 108 or the host computer 101 (step S203). As described above, the printer 104 executes the process of correcting the ID card 11 in accordance with the correction request message.

Next, the issue process and the correction process executed by the printer 104 are explained in detail.

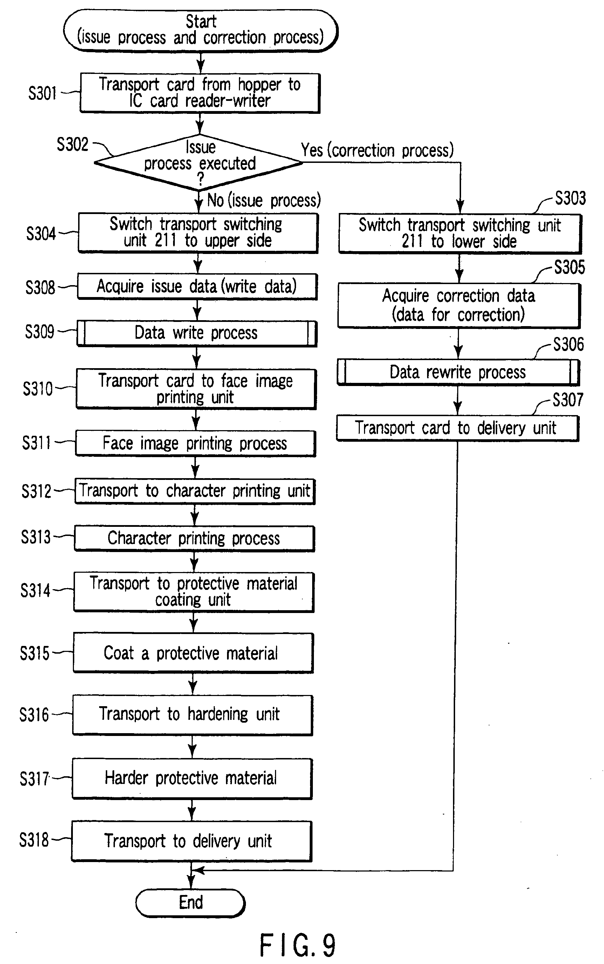

FIG. 9 is a flowchart for explaining the procedure for the issue process and the correction process executed by the printer 104. The processes shown in FIG. 9 correspond to step S202 shown in FIG. 8.

First, the printer 104 retrieves one storage medium (the ID card 11 not yet issued or the ID card 11 in which the data is to be corrected) loaded in the hopper 201 by the recovery unit 202. The storage medium retrieved from the hopper 201 by the recovery unit 202 is transported to the card reader-writer 203 through the transportation path 209 (step S301).

The card reader-writer 203 determines whether the storage medium constituting the ID card 11 (assumed to be the IC card 11 having the IC chip 12 built therein in this case) transported thereto is already subjected to the issue process or not (step S302). For example, the card reader-writer 203 transmits a command making an inquiry to the IC card 11 about whether the issue process has been executed or not, and makes the determination based on the response to the command from the IC card 11.

Specifically, step S302 determines whether the IC card 11 is to be subjected to the issue process or the correction process. In the case where the determination is that the IC card 11 has already been subjected to the issue process (YES at step S302), for example, the card reader-writer 203 determines that the IC card 11 is to be subjected to the correction process. In this case, the transport switching unit 211 switches the transportation path of the IC card 11 to the transportation path b shown in FIG. 2 (step S303). The transportation path b is intended for execution of the correction process for the IC card. Specifically, the transportation path of the IC card to be corrected is constituted of the transportation path b in which the printing process by the face image printing unit 204 and the character printing unit 205 is omitted. This is due to the fact that the printing process on the printing surface has already been executed on the IC card to be corrected.

In the case where the determination is that the IC card 11 has yet to be subjected to the issue process (NO at step S302), on the other hand, the card reader-writer 203 determines that the IC card 11 is to be subjected to the issue process. In this case, the transport switching unit 211 switches the transportation path of the IC card 11 to the transportation path a shown in FIG. 2 (step S304). The transportation path a is the one for executing the issue process on the particular IC card. Specifically, the transportation path of the IC card to be subjected to the issue process is constituted of the transportation path a through the face image printing unit 204 and the character printing unit 205. This is due to the need of the process of printing on the printing surface (obverse surface) of the IC card to be subjected to the issue process.

Upon determination that the IC card 11 has already been subjected to the issue process, i.e. upon determination that the IC card 11 is to be subjected to the correction process (YES at step S302), the card reader-writer 203 acquires the correction data for the IC card 11 (step S305). This correction data is received together with the correction request from the confirmation terminal unit 108 or the filing unit 106. In the case under consideration, the correction data is stored in the internal memory, not shown, of the printer 104.

Upon acquisition of the correction data for the IC card 11, the card reader-writer 203 executes the process of rewriting the data stored in the IC chip 12 of the IC card 11 based on the correction data (step S306). The IC card 11 thus subjected to the rewrite process is transported to the delivery unit 208 as a corrected ID card 11 through the transportation path b (step S307).

As described above, the IC card making up the ID card 11 is subjected to the correction process through the processing procedure of steps S301 to S303 and S305 to S307 in the printer 104.

Upon determination that the IC card 11 is yet to be subjected to the issue process, i.e. upon determination that the IC card 11 is to be subjected to the issue process (NO at step S302), on the other hand, the card reader-writer 203 acquires the issue data for the IC card 11 (step S308). This issue data is received together with the issue request message from the image pickup unit 103, etc. The issue data received together with the issue request message, for example, is stored in the memory (not shown) in the printer 104.

Upon acquisition of the issue data for the IC card 11, the card reader-writer 203 executes the process of writing the data such as the personal information of the applicant 21 in the IC chip 12 of the IC card 11 based on the issue data (step S309). In this write process, the face image data and the personal information such as the personal number (ID number), name, age and address are written in the IC chip 12 of the IC card 11.

The IC card 11 subjected to the write process by the card reader-writer 203 is transported to the face image printing unit 204 through the transportation path a (step S310). Once the IC card 11 is transported to the face image printing unit 204, the face image printing unit 204 prints the face image 13 on the printing surface (obverse surface) of the particular IC card 11 based on the data of the face image (the face image printing data) contained in the issue data (step S311).

The IC card 11 on which the face image 13 is printed by the face image printing unit 204 is transported to the character printing unit 205 (step S312). Once the IC card 11 is transported to the character printing unit 205, the character printing unit 205 prints the character information 14 on the printing surface (obverse surface) of the IC card based on the character data such as the personal information of the applicant 21 contained in the issue data (step S313).

The IC card 11 printed with the character information 14 by the character printing unit 205 is transported to the protective material coating unit 206 (step S314). Once the IC card 11 is transported to the protective material coating unit 206, the protective material coating unit 206 coats a protective material on the printing surface (obverse surface) of the IC card 11 (step S315).

The IC card 11 coated with the protective material on the printing surface thereof by the protective material coating unit 206 is transported to the hardening unit 207 (step S316). Once the IC card 11 is transported to the hardening unit 207, the hardening unit 207 hardens the protective material coated on the printing surface (obverse surface) of the IC card 11 (step S315). The IC card 11 with the protective material hardened on the printing surface thereof by the hardening unit 207 is transported to the delivery unit 208 as an ID card 11 already subjected to the issue process (step S318).

As described above, in the IC card constituting the ID card 11, the issue process is executed through the processing procedure of steps S301 to S302, S304 and S308 to S318 in the printer 104.

Next, the data write process and the data rewrite process executed by the printer 104 are explained in more detail.

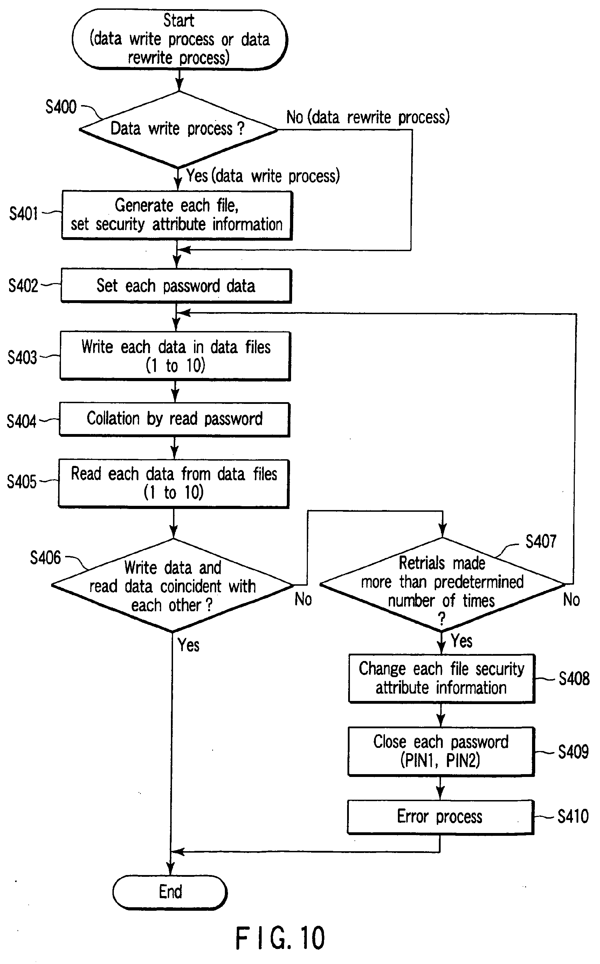

FIG. 10 is a flowchart for explaining the procedure for the data write process and the data rewrite process executed by the printer 104. The process shown in FIG. 10 corresponds to steps S306 and S309 in FIG. 9.

First, in the case where the process is to be executed to write the data in the IC chip (storage unit) 12 of the IC card (ID card) 11 (YES at step S400), the controller of the printer 104 determines each file of the data to be written and the security attribute information for the particular file, based on the issue data. Based on this determination, the card reader-writer 203 of the printer 104 defines each file (writes the definition information) in the IC chip 12 of the IC card 11, and thus sets (writes) the security attribute information in each file (step S401).

In the case under consideration, a file configured as shown in FIG. 4 is assumed to be set in the IC chip 12 of the IC card 11. In this case, the files of file numbers "0" to "13" are defined in the IC chip 12 of the IC card 11, so that the security attribute information is written in each file.

Once the files and the security attribute information for them are set, the card reader-writer 203 writes each password contained in the issue data in each file for storing the data of each password (step S402). In the example of the data structure shown in FIGS. 4 and 5, for example, the card reader-writer 203 writes the data of the read password contained in the issue data as the data of the file of file number "12" and the data of the write password contained in the issue data as the data of the file of file number "13".

Once the data of each password is written, the card reader-writer 203 writes each data contained in the issue data in the corresponding file (step S403). In the example of the data structure shown in FIGS. 4 and 5, for example, the card reader-writer 203 writes each data corresponding to each file (each file of type "WEF") of file numbers "0" to "10", based on the issue data.

Once the data corresponding to each file is written, the card reader-writer 203 executes the collation using the read password (step S404). In the process, the read password contained in the issue data is supplied to the IC card 11 thereby to execute the collation of the read password. As long as the read password is correctly written at step S402, the collation by the read password ends in success.

Once the collation by the read password ends in success, the IC card 11 assumes a state in which the data of each file with the read password set as an access condition to read the data can be read. Under this condition, the card reader-writer 203 executes the process of reading the data of each file stored in the IC chip 12 of the IC card 11 (step S405).

In the example shown in FIG. 4, for example, the access condition for reading the data is set in the read password (PIN1) as the security attribute information in the files of file numbers "0" to "10". Once the collation by the read password (PIN1) ends in success, therefore, the particular IC card 11 assumes a state in which the data of the files of file numbers "0" to "10" can be read. Under this condition, the card reader-writer 203 transmits a command requesting to read the files of file numbers "0" to "10" to the particular IC card 11. The IC card 11 reads the data from the files of file numbers "0" to "10", and returns these data to the card reader-writer 203 as a response to the command. As a result, the card reader-writer 203 acquires the data of the files of file numbers "0" to "10" from the IC card 11.

Once the data of the files written in the IC chip 12 of the IC card 11 are read, the card reader-writer 203 determines whether the write data and the read data (i.e. the data written in the IC chip 12) are coincident with each other (step S406). Upon determination that the write data and the read data are coincident with each other, i.e. upon determination that the data is correctly written (YES at step S406), the printer 104 finishes the data write process.

Upon determination that the write data and the read data are not coincident with each other, i.e. upon determination that the data is not correctly written (NO at step S406), on the other hand, the card reader-writer 203 executes the retrial process for executing steps S403 to S406 repeatedly until a predetermined number of retrials is reached (NO at step S407). Once the retrials reach the predetermined number in the retrial process (NO at step S407), the printer 104 executes the invalidation process to invalidate the IC card (steps S408 to S410).

In this invalidation process, the card reader-writer 203 changes the file attribute information of the files in order to prohibit the access to all the files defined in the IC chip 12 of the IC card 11 (step S408). At step S408, for example, the process is executed to rewrite all the file attribute information of all the files to make them inaccessible. Further, the card reader-writer 203 executes the process of closing each password (step S409). This closing process makes the data of each password unusable.

Upon complete execution of the process by the card reader-writer 203, the controller of the printer 104 processes the error (step S409). In the error process, the process is executed to announce a guide to the issuer to discard the IC card 11 in view of the incapability of the process to issue or correct the IC card 11.

In the invalidation process described above, the IC card constituting the ID card in which the data cannot be written correctly can be set in a state totally inaccessible. The IC chip 12 of the IC card 11 in which the data cannot be correctly written is highly liable to be inoperative or unstable in operation. In such a case, the particular IC card 11 is required to be appropriately disposed of on the responsibility of the issuer. This is to prevent the IC card from being altered or otherwise illegally used.

In the case where the process is executed to rewrite (correction process) the data in the IC chip 12 of the IC card 11 (NO at step S400), the controller of the printer 104 executes a similar process to steps S402 to S410 based on the correction data. In the correction process, only a part of the data is rewritten. In the correction process, therefore, only the data to be corrected may be rewritten at step S402 or S403 and the only the data to be corrected may be collated at steps S405 and S406.

Next, the process executed in the confirmation terminal unit 108 is explained.

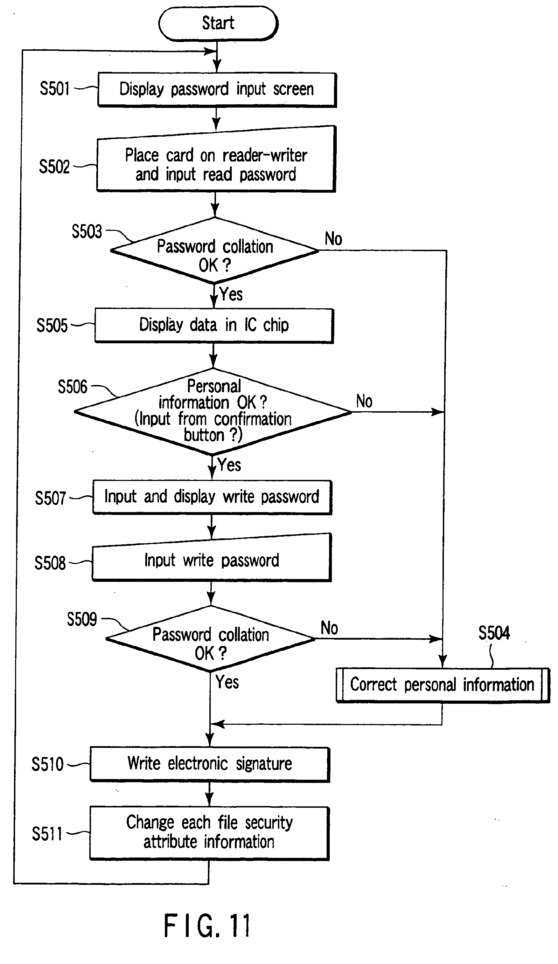

FIG. 11 is a flowchart for explaining an example of the process executed in the confirmation terminal unit 108. FIG. 11 illustrates an example of the procedure for the confirmation process executed by the confirmation terminal unit 108.

First, the display unit 303 of the confirmation terminal unit 108 displays a guide prompting to input the read password (PIN1) (step S501). Under this condition, the issuer or the applicant 21 sets the issued ID card 11 in the card reader-writer 302 and inputs the read password designated by the applicant 21 by way of the keyboard 304 (step S502).

Once the read password is input, the processing unit 301 of the confirmation terminal unit 108 executes the process to collate the read password input by the applicant 21 with the read password stored in the IC chip (storage unit) 12 of the IC card (ID card) 11 set in the card reader-writer 302 (step S503).

In this collation process, the card reader-writer 302 transmits a command requesting the password collation to the IC card 11 together with the read password input by the applicant. In response, the IC card 11 collates the received read password with the read password stored in the IC chip 12 and returns the collation result to the card reader-writer 302. This collation result is received by the card reader-writer 302 in the confirmation terminal unit 108 and supplied to the processing unit 301. The IC card 11 in which the collation of the read password has ended in success assumes a state in which the data of the file with the read access condition [read] set in PIN1 as security attribute information can be read.

In the case where the collation by the read password ends in failure, i.e. in the case where the read password input by the applicant 21 and the read password stored in the IC chip 12 fail to coincide with each other (NO at step S503), the processing unit 301 transfers to the correction process for the IC card 11 to correct the read password stored in the IC chip 12 of the IC card 11 (step S504).

In the case where the collation by the read password ends in success (YES at step S503), the processing unit 301 executes the process of reading the data such as the personal information of the applicant 21 written in the IC chip 12 of the IC card 11. Once the data such as the personal information of the applicant 21 is read by the data read process, the processing unit 301 displays the particular data on the operating screen of the data display unit 303 (step S505). As a result, the display unit 303 displays the data read from the IC chip 12 of the IC card 11, i.e. the data written in the IC chip 12 of the IC card 11.

Based on the data displayed on the display unit 303, the applicant 21 confirms whether the data such as the personal information written in the IC chip 12 of the IC card 11 is correct or not. In the case where the data displayed on the display unit 303 is erroneous, i.e. in the case where the data written in the IC chip 12 of the IC card 11 is required to be corrected, the applicant 21 inputs an instruction to correct the data through a button (correction button) on the keyboard or the mouse. Once the instruction is input through the correction button (NO at step S506), the processing unit 301 transfers to the correction process for the IC card 11 to correct the data stored in the IC chip 12 of the IC card 11 (step S504).

Upon confirmation that the data displayed on the display unit 303 is correct, the applicant 21 inputs the particular confirmation through a button (confirmation button). Once the confirmation is input through the confirmation button (YES at step S506), the processing unit 301 displays an input guide of the write password (PIN2) on the display unit 303 (step S507). Under this condition, the issuer or the applicant 21 inputs the write password designated by the applicant 21, through the keyboard 304 (step S508).

Once the write password is input, the processing unit 301 of the confirmation terminal unit 108 executes the process of collating the write password input by the applicant 21 with the write password stored in the IC chip 12 of the IC card 11 (step S509).

In this collation process, the card reader-writer 302 transmits a command requesting the write password collation to the IC card 11 together with the write password input by the applicant 21. In response, the IC card 11 collates the write password supplied from the card reader-writer 302 with the write password stored in the IC chip 12 and returns the collation result to the card reader-writer 302. This collation result is received by the card reader-writer 302 and supplied to the processing unit.

In the case where the collation by the write password ends in failure, i.e. in the case where the write password input by the applicant 21 fails to coincide with the write password stored in the IC chip 12 (NO at step S509), the processing unit 301 transfers to the correction process for the IC card 11 to correct the write password stored in the IC chip 12 of the IC card 11 (step S504).

In the case where the collation by the write password ends in success (YES at step S509), on the other hand, the processing unit 301 executes the issue completion process (steps S510 and S511). In this issue completion process, the processing unit 301 first executes the process of writing the electronic signature data in the IC chip 12 of the IC card 11 through the card reader-writer 302 (step S510). This electronic signature data is to substantiate the legitimacy of the data written in the IC chip 12 of the IC card 11 or the fact that the particular IC card 11 is issued by the issuer.

Once the electronic signature data is written in the IC chip 12 of the IC card 11, the processing unit 301 changes the security attribute information to prohibit the operation of writing and rewriting the data in each file storing the personal information and the like in the IC chip 12 (step S511). In the process of changing the security attribute information, for example, the security attribute information is changed to the state shown in FIG. 5 from the state shown in FIG. 4.

In the example shown in FIG. 11, the control proceeds to step S510 upon completion of the correction process of step S504 thereby to execute the issue completion process for the IC card 11. In the certification medium issue system, however, the control may alternatively execute the confirmation process again after the correction process. In such a case, in the certification medium issue system, the control proceeds to step S501 again after completion of the correction process at step S504 thereby to execute the confirmation process for the IC card 11.

Next, a first example of the correction process is explained.

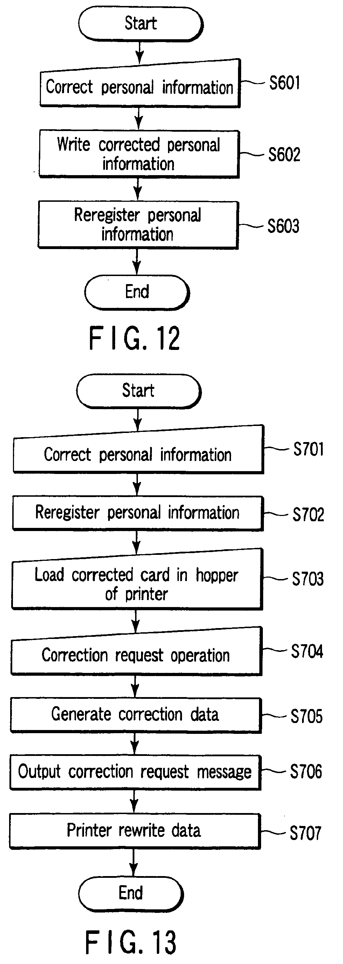

FIG. 12 is a flowchart for explaining a first example of the correction process executed at step S504 shown in FIG. 11. The first example of the correction process shown in FIG. 12 is executed by the confirmation terminal unit 108.

First, assume that the process of correcting the data stored in the storage unit 12 of the IC card 11 is executed in the confirmation process shown in FIG. 11. In the confirmation terminal unit 108, the issuer or the applicant 21 inputs the contents of correction through the keyboard 304 or the mouse 305 (step S601).

In the case where the collation of the read password or the write password ends in failure, for example, the issuer or the applicant 21 inputs the correct read password or the correct write password as the contents of correction by way of the keyboard 304. Also, in the case where the data displayed on the display unit 303 is erroneous, the issuer or the applicant 21 corrects the data displayed on the display unit 303 through the keyboard 304 as the contents of correction.

Once the contents of correction are input, the processing unit 301 of the confirmation terminal unit 108 executes the process of rewriting the data based on the contents of correction through the card reader-writer 302 (step S602). In this data rewrite process, for example, the processing unit 301 generates the rewrite data based on the contents of correction. The card reader-writer 302, based on the rewrite data generated by the processing unit 301, executes the process of rewriting the data written in the IC chip 12 of the IC card 11.

Upon completion of the data rewrite process, the processing unit 301 executes the process (update process) of registering the corrected data again in the data base 102 (step S603). As a result, the data on the applicant 21 registered in the data base 102 also comes to reflect the corrected data.

In the first example of the correction process, assume that the data written in the storage unit 12 of the ID card 11 for which the issue process is executed is not correct. The contents of correction are input by the confirmation terminal unit 108, and the data is rewritten in accordance with the contents of correction. Further, the personal information of the applicant is updated (reregistered) in the data base 102. As a result, the data written in the storage unit 12 of the ID card 11 for which the issue process is executed, if found erroneous, can be easily updated.

Next, a second example of the correction process is explained.

FIG. 13 is a flowchart showing a second example of the correction process executed at step S504 shown in FIG. 11. The second example of the correction process shown in FIG. 13 is executed by the confirmation terminal unit 108 and the printer 104.

First, in the case where the process of correcting the data stored in the storage unit 12 of the IC card 11 is executed in the confirmation process shown in FIG. 11, the contents of correction are input through the keyboard 304 or the mouse 305 in the confirmation terminal unit 108 (step S701).

Once the contents of correction are input, the processing unit 301 of the confirmation terminal unit 108 executes the process of reregistering the data in the data base 102 based on the contents of correction (step S702).

After the contents of correction are input, the issuer loads the IC card 11 set in the card reader-writer 302, in the hopper 201 of the printer 104 (step S703). The issuer who has set the IC card 11 in the printer 104 inputs a correction request by way of the keyboard 304 or the mouse 305 (step S704). Once the correction request is input, the processing unit 301 of the confirmation terminal unit 108 executes the process of generating the correction data for the IC card 11 (step S705).

In this correction data generation process, for example, the processing unit 301 acquires the data such as the personal information of the applicant 21 from the data base 102 with the data reregistered at step S702, and based on the data thus acquired, generates the correction data. As the process of generating the correction data, the processing unit 301 may generate the correction data based on the contents of correction that have been input.

Once the correction data is generated, the processing unit 301 outputs a correction request message accompanied by the generated correction data to the printer 104 (step S706). The process of steps S704 to S706 can also be executed by other devices connected to the network 109.

In the printer 104 that has received the correction request message accompanied by the correction data as described above, the process of correcting the IC card 11 is executed through the procedure shown in FIGS. 9 and 10 (step S707).

In the second example of the correction process described above, assume that the data written in the storage unit 12 of the ID card 11 for which the issue process is executed is not correct. The confirmation terminal unit 108 updates (reregisters) the data of the applicant registered in the data base 102 in accordance with the contents of correction that have been input. Upon reregistration of the data of the applicant including the contents of correction in the data base 102, the printer, based on the data of the applicant including the contents of correction reregistered in the data base 102, rewrites the data written in the storage unit 12 of the ID card 11. As a result, the data written in the storage unit 12 of the ID card 11 for which the issue process is executed, if erroneous, can be easily updated.

As explained above, the certification medium issue system first executes the issue process for writing each data in the storage unit of the ID card in a rewritable state, and displays the data written in the storage unit of the ID card subjected to the issue process on a visible display unit. Upon confirmation that the data written in the storage unit of the ID card displayed on the display unit is erroneous, the process of correcting the data written in the storage unit of the particular ID card is executed. Upon confirmation that the data written in the storage unit of the ID card displayed on the display unit is correct, on the other hand, the data written in the storage unit of the ID card is prohibited from being rewritten.

As a result, the applicant can easily confirm the data written in the storage unit of the ID card that has been subjected to the issue process. Further, even in the case where the application form is filled erroneously or the registration data is input erroneously, the data written in the storage unit of the ID card subjected to the issue process can be easily corrected. Consequently, the storage medium constituted of the ID card to be disposed of can be reduced, and the wasteful cost accrual is prevented.

Furthermore, the issue process is such that in the case where the data written in the storage unit of the ID card is read and the write data fails to coincide with the read data, the data written in the storage unit of the ID card is entirely prohibited from being accessed. As a result, the chance of illegal use of the ID card subjected to an erroneous issue process due to an operating failure or the like is eliminated, and the particular card can be safely disposed of.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A certification medium issue system **characterized by** comprising:
an information acquisition unit (S11, S12, S13) which acquires issue data required to issue a certification medium;
an issue process execution unit (S14) which writes the various data based on the issue data acquired by the information acquisition unit (S11, S12, S13) in a storage unit (12) of a storage medium (11) used as a certification medium in a rewritable state;
a correction process execution unit (S17) which corrects the data written in the storage unit (12) of the storage medium (11), in the case where an erroneous data is written in the storage unit (12) of the storage medium (11) subjected to the issue process by the issue process execution unit (S14); and
an issue completion process execution unit (S18) which changes the data written in the storage unit (12) of the storage medium (11) to a state that cannot be rewritten, in the case where a correct data is written in the storage unit (12) of the storage medium (11) subjected to the issue process by the issue process execution unit (S14).

2. The certification medium issue system according to claim 1,
**characterized in that** the storage medium (11) used as the certification medium is an IC card having built therein an IC chip as a storage unit (12).

3. The certification medium issue system according to claim 1,
**characterized in that** the issue process execution unit (S14) further prints printing data based on the issue data acquired by the information acquisition unit (S11, S12, S13) on a printing surface of the storage medium (11).

4. The certification medium issue system according to claim 1, **characterized by** further comprising:
a display unit (S15) which displays the data written in the storage unit (12) of the storage medium (11) subjected to the issue process by the issue process execution unit (S14);
wherein the correction process execution unit (S17) corrects the data written in the storage unit (12) of the storage medium (11), in the case where an erroneous data is displayed on the display unit (S15); and
the issue completion process execution unit (S18) changes the data written in the storage unit (12) of the storage medium (11) to a state that cannot be rewritten, in the case where a correct data is displayed on the display unit (S15).

5. The certification medium issue system according to claim 1,
**characterized in that** the issue process execution unit (S14) applies an attribute information to the data written in the storage unit (12) of the storage medium (11) and sets the attribute information in a rewritable state; and
the issue completion process execution unit (S18) changes the attribute information of the data written in the storage unit (12) of the storage medium (11) to a state that cannot be rewritten.

6. The certification medium issue system according to claim 1,
**characterized in that** the issue process execution unit (S14) further collates the data that is written in the storage unit (12) of the storage medium (11) with a data that read from the storage unit (12) of the storage medium (11), and changes the data written in the storage unit (12) of the storage medium (11) to a state that cannot be rewritten, in the case where the data that is written in the storage unit (12) did not coincide with the data that read from the storage unit (12).

7. The certification medium issue system according to claim 1,
**characterized in that** the issue completion process execution unit (S18) further attaches an electronic signature to the data written in the storage unit (12) of the storage medium (11), in the case where a correct data is written in the storage unit (12) of the storage medium (11) subjected to the issue process by the issue process execution unit (S14).

8. A certification medium issue method **characterized by** comprising:
acquiring issue data required to issue a certification medium (S11, S12, S13);
executing an issue process (S14) for writing various data based on the acquired issue data in a storage unit (12) of a storage medium (11) used as a certification medium in a rewritable state;
executing a correction process (S17) for correcting the data written in the storage unit (12) of the storage medium (11), in the case where an erroneous data is written in the storage unit (12) of the storage medium (11) subjected to the issue process; and
executing an issue completion process (S18) for changing the data written in the storage unit (12) of the storage medium (11) to a state that cannot be rewritten, in the case where a correct data is written in the storage unit (12) of the storage medium (11) subjected to the issue process.

9. The certification medium issue method according to claim 8,
**characterized in that** the storage medium (11) used as the certification medium is an IC card having built therein an IC chip as a storage unit (12).

10. The certification medium issue method according to claim 8,
**characterized in that** the issue process (S14) further prints printing data based on the acquired issue data on a printing surface of the storage unit (11).

11. The certification medium issue method according to claim 8, **characterized by** further comprising:
displaying (S15) the data written in the storage unit (12) of the storage medium (11) subjected to the issue process (S14);
wherein the correction process (S17) corrects the data stored in the storage unit (12) of the storage medium (11), in the case where an erroneous data is displayed; and
the issue completion process (S18) changes the data written in the storage unit (12) of the storage medium (11) to a state that cannot be rewritten, in the case where a correct data is displayed.

12. The certification medium issue method according to claim 8,
**characterized in that** the issue process (S14) applies an attribute information to the data written in the storage unit (12) of the storage medium (11) and sets the attribute information in a rewritable state; and
the issue completion process (S18) changes the attribute information of the data written in the storage unit (12) of the storage medium (11) to a state that cannot be rewritten.

13. The certification medium issue method according to claim 8,
**characterized in that** the issue process (S14) further collates the data that is written in the storage unit (12) of the storage medium (11) with a data that read from the storage unit (12) of the storage medium (11), and changes to the data written in the storage unit (12) of the storage medium (11), in the case where the data that is written in the storage unit (12) did not coincide with the data that read from the storage unit (12).

14. The certification medium issue method according to claim 8,
**characterized in that** the issue completion process (S18) further attaches an electronic signature to the data written in the storage unit (12) of the storage medium (11), in the case where a correct data is written in the storage unit (12) of the storage medium (11) subjected to the issue process.
